# EUROPÄISCHE PATENTSCHRIFT

(11) **EP 0 735 148 B1**
(45) Veröffentlichungstag und Bekanntmachung des Hinweises auf die Patenterteilung: **13.06.2001**
(21) Anmeldenummer: 96200782.9
(22) Anmeldetag: 20.03.1996
(51) Int. Cl.: C21D 8/02, C22C 33/02

(54) **Verfahren zur Herstellung eines Bauteiles mit aufgelöteten Folien aus ODS-Sintereisen-Legierungen und nach diesem Verfahren hergestelltes Bauteil**
Process for making a structural component with brazed foils of ODS sintered iron alloys and component made by this process
Procédé de fabrication d'un élément de construction avec des feuilles brasées à partir d'un alliage de fer fritté ODS et élément obtenu par ce procédé

(30) Priorität: 25.03.1995 DE 19511089
(43) Veröffentlichungstag der Anmeldung: 02.10.1996
(73) Patentinhaber: PLANSEE Aktiengesellschaft, 6600 Reutte, Tirol (AT)
(72) Erfinder: Sporer, Dieter, Dr., 6675 Tannheim (AT)
(74) Vertreter: Lohnert, Wolfgang, Dr.

(56) Entgegenhaltungen:
- EP-A- 0 256 555
- GB-A- 2 256 202
- US-A- 5 032 190
- STAHL UND EISEN, Bd. 112, Nr. 7, 15.Juli 1992, DÜSSELDORF, DE, Seiten 77-82, 132, XP000293330 J. J. FISCHER ET AL.: "MECHANISCH LEGIERTE WERKSTOFFE FUER INDUSTRIELLE ANWENDUNGEN"
- PROCEEDINGS OF THE 2ND INTERNATIOAL CONFERENCE ON OXIDE DISPERSION STRENGTHENED SUPERALLOYS BY MECHANICAL ALLOYING, Mai 1983, LONDON, GB , Seiten 129-148, XP000196029 T. J. KELLY: "JOINING MECHANICAL ALLOYS ....."
- POWDER METALLURGY INTERNATIONAL, Bd. 10, Nr. 4, 1978, FREIBURG, DE, Seiten 202-204, XP000196030 G. H. GESSINGER ET AL. : "Mechanical Properties ....."
- PROCEEDINGS OF THE THIRTYTHIRD JAPAN CONGRESS ON MATERIALS RESEARCH, März 1990, TOKIO, JP, Seiten 13-18, XP000570171 M. OTSUKA ET AL.: "TENSILE DEFORMATON BEHAVIOR ....."

## Beschreibung

Die Erfindung betrifft ein Verfahren zur Herstellung eines Bauteiles mit auf einem Basiskörper aufgelöteten Elementen aus gebogenen oder gefalzten Metallfolien einer Folienstärke kleiner 500 µm aus einem ODS-Sinterwerkstoff auf Eisenbasis, wobei dieser Sinterwerkstoff durch mechanisches Legieren der Ausgangspulver, Heißpressen und/oder Strangpressen hergestellt und zur Folienformgebung und zur gleichzeitigen Verbesserung der mechanischen Festigkeitseigenschaften in der Schrittfolge Heißwalzen, Kaltwalzen und abschließendes Rekristallisationsglühen fertigbearbeitet wird.

Mechanisch legierte ODS-Sinterwerkstoffe werden in einzelnen Bauteilen für Turbinen und Aggregate verwendet, bei denen es auf besonders hohe Warmfestigkeit und vor allem auch auf Korrosionsbeständigkeit gegenüber heißen Gasen ankommt.
Ein Grund dafür, daß diese Werkstoffe sich nur zögernd in neuen Anwendungsfeldern durchsetzen liegt darin, daß sich die herausragenden Eigenschaften dieser Werkstoffe nur mittels besonders aufwendiger Fertigungsschritte erzielen lassen, mit der Folge, daß diese Werkstoffe nur in beschränkten Bauformen vorliegen, sich nur mit Einschränkung maschinell bearbeiten und sich selbst unter Einhaltung spezieller Verfahrensschritte nur bedingt mit gleichartigen oder anderen Werkstoffen ohne nennenswerten Qualitätsverlust fügen lassen.
Für die Herstellung derartiger Werkstoffe mit den typischerweise erzielbaren Festigkeits- und Korrosionseigenschaften hat sich bis heute als weitgehend unverzichtbare Schrittfolge das mechanische Legieren der vorgemischten Legierungskomponenten, gefolgt von einem Heißpressen und/oder Warmstrangpressen des legierten Pulvers bewährt. Im Falle der Auslieferung des Halbzeugs als Stabmaterial wird das Gut in weiterer Schrittfolge warmgewalzt und dann einer abschließenden Rekristallisationsglühung zur Kornvergröberung des Werkstoffs unterzogen.

Der Prozeß des Rekristallisationsglühens bei üblicherweise ca. 1330 bis 1500°C führt zu einer wesentlichen Steigerung der Warmfestigkeit des Werkstoffes infolge Bildung einer grobkörnigen Gefügestruktur. Wird der Werkstoff zu Blechen verarbeitet, so erfolgt anschließend an das Warmwalzen ein aus mehreren Walzstichen bestehendes Kaltwalzen, wiederum gefolgt von einem abschließenden Rekristallisationsglühprozeß. Dieses Standard-Herstellungsverfahren wird beispielsweise im Aufsatz "Mechanisch legierte Werkstoffe für industrielle Anwendungen", John J. Fischer et al., Stahl und Eisen 112 (1992), Nr. 7, Seiten 77ff dargestellt.

Derselbe Aufsatz führt aus, daß Feinbleche aus mechanisch legierten Sintereisenwerkstoffen bis zu einer Folienstärke von 0,1 mm gefertigt wurden und daß insbesondere Feinbleche aus diesem Werkstoff neben der hohen Festigkeit zugleich eine Sprödigkeit aufweisen, die ein Biegen und Falzen desselben bei Raumtemperatur wegen der Gefahr von Sprödbrüchen und Rissen nicht zufriedenstellend gestattet. Als Ausweg wird das für den Praktiker wenig befriedigende Erwärmen des Feinbleches auf eine Temperatur oberhalb der spröd/duktil Übergangstemperatur genannt. Das heißt, das Formen und Falzen von Feinblech muß bei erhöhter Temperatur von mindestens 100°C erfolgen.

Es ist in der Literatur wiederholt auf die schlechte Verschweißbarkeit und Verlötbarkeit von mechanisch legierten ODS-Werkstoffen auf Eisen- und Nickelbasis hingewiesen worden. Grund dafür sind die stabilen Oxidschichten auf der Werkstoffoberfläche. Diese sind aufgrund der angewandten Herstellungsschritte unvermeidbar. Bereits in der Publikation "Proceedings of the 2nd International Conference on Oxide Dispersion Strengthened Superalloys by Mechanical Alloying", London, 22. - 25. Mai 1983, Seiten 129ff, wird auf die Notwendigkeit zur sorgfältigen Vorbereitung dieser Werkstoffe für ein Verlöten oder Verschweißen hingewiesen. Als brauchbare Vorbehandlung für das Vakuumhartlöten wird dort das mechanische Schleifen der Lötflächen genannt.

Es wird ergänzend empfohlen, die geschliffenen Oberflächen bis zum Löten sofort gegen erneute Oxidation zu schützen, beispielsweise durch Eintauchen in Alkohol. Der Aufsatz beschreibt u.a. Nickel- und Kobaltbasis-Lote als für derartige Materialien erfolgreich eingesetzte Lotwerkstoffe. Es wird auf die Gefahr hingewiesen, daß beim Fügen dieser Werkstoffe deren Festigkeits- und Korrosionseigenschaften verschlechtert werden. Entsprechend lassen sich Verfahren und Lote, die für das Fügen von 2,5 mm dicken Blechen erfolgreich angewendet werden, laut Fachaufsatz nicht auf das Fügen vergleichsweise dickerer Platten anwenden. Für das Fügen sehr dünner Folien kommen Laser-, Elektronstrahl- und Widerstands-Punktschweißen in Betracht; brauchbare Hartlötverfahren werden nicht genannt.

Aufgabe vorliegender Erfindung ist danach die Bereitstellung eines Verfahrens, nach dem Bauteile gemäß Oberbegriff von Anspruch 1 hergestellt werden können. Derartig verlötete Bauteile konnten bisher nicht zufriedenstellend gefertigt werden. Die Aufgabe besteht also insbesondere darin, ein Verfahren aufzuzeigen, nach dem sich sehr dünne Folien bei Raumtemperatur falzen und biegen lassen, ohne eine Rißbildung zu zeigen und anschließend verlötet werden können, ohne im fertigen Bauteil die guten Korrosions- und mechanischen Festigkeitseigenschaften üblicher ODS-Eisenwerkstoffe einzubüßen.

Die Aufgabe wird erfindungsgemäß durch ein Verfahren gelöst, nach dem die Fertigung des Folienwerkstoffes nach dem Kaltwalzen mit einem Weichglühprozeß unterbrochen wird und nach dem die in der Folge bei Raumtemperatur gebogene oder gefalzte Folie in einem einzigen Arbeitsgang gleichzeitig mit dem Auflöten bei Temperaturen zwischen 1100 und 1330°C während 3 - 600 min rekristallisations-geglüht wird.

Die erfinderische Lösung besteht also in einer wesentlichen Änderung des Herstellverfahrens gegenüber demjenigen, das bisher zur Erzielung der herausragenden Werkstoffeigenschaften für unverzichtbar gehalten wurde.

Das Weichglühen im Anschluß an das Warm- und Kaltwalzen von Vormaterial aus diesen Werkstoffen an sich war bereits in der Vergangenheit erprobt worden. Doch die Ergebnisse, ermittelt an massiven Proben und nicht an Folien, waren wenig ermutigend. Es wurde im üblichen Temperaturbereich unterhalb der Rekristallisationstemperatur weder ein Rückgang der Mikrohärte und Festigkeit noch ein markanter Anstieg der Duktilität ermittelt ("Mechanical Properties and Damping Behaviour of an Oxide-Dispersion-Strengthened Ferritic Steel MA 956", G.H. Gessinger and O. Mercier, Powder Met. Int. 10.4 (1978); "Tensile Deformation Behaviour of Oxide Dispersion Strengthened Ferritic Steel at Elevated Temperature", M. Otsuka and K. Watanabe, The 33rd Japan Congress on Materials Research, March 1990).
Es war daher überraschend und nicht vorhersehbar, daß mit dem Weichglühen dünnster Folien eine so starke Erhöhung der Duktilität einherging, die ein anschließendes Biegen oder Falzen derartiger Folien bei Raumtemperatur, d.h. ohne vorheriges Anwärmen, problemlos zuließ, ohne daß in der Folie Risse entstanden und ohne daß sich bei der weiteren Folge der erfinderischen Verfahrensschritte im Endprodukt ein bleibender Abfall der hohen Werkstoffestigkeit und guten Korrosionsbeständigkeit einstellte. Der Prozeß des Weichglühens wird vorteilhafterweise während 30 bis 300 Minuten bei 600 bis 1050°C unter Schutzgas, in H₂-Atmosphäre oder im Hochvakuum vorgenommen.

Das Auflöten der Folien läßt sich überraschenderweise mittels eines breiten Spektrums an bekannten Lotwerkstoffen durchführen. Während üblicherweise mechanisch legierte ODS-Sinterwerkstoffe auf Eisenbasis bei mindestens 1330°C rekristallisationsgeglüht werden, ließen sich erfindungsgemäße Folien bei Verwendung entsprechender Lotwerkstoffe schon ab einer Temperatur von 1100° sowohl auf ein Basisteil auflöten als auch gleichzeitig in ihrem gesamten Volumen rekristallisieren. Das Auflöten dünner Folien, durchgeführt nach dem erfindungsgemäßen Verfahren, erfordert daher keines der bekannten agressiven Lötmaterialien, die einzelne Komponenten des zu verlötenden Sinterwerkstoffes anlösen und damit zu bleibenden Werkstoffeigenschafts-Verschlechterungen führen, die mittels eines Rekristallisationsprozesses nicht mehr rückgängig zu machen sind.

Als Lötwerkstoffe haben sich sowohl solche auf Kobaltbasis, wie eine CoCrNiSiW-Legierung, als auch solche auf Nickel-Chrom-Basis, wie beispielsweise NiCrSi, NiCrSiMn, NiCrB und NiCrSiBFeW, aber auch Lote auf Eisenbasis, wie FeSiB und Titanbasis besonders bewährt.

Bei Anwendung des erfinderischen Verfahrens hat es sich als hilfreich erwiesen, die zu verlötenden Flächen gemäß Stand der Technik zuvor mechanisch von Oberflächenverunreinigungen, insbesondere von oberflächlich anhaftenden Oxidschichten, zu befreien. Dieser Säuberungsschritt wird vorzugsweise in Unterbrechung des aus einer Mehrzahl von Walzstichen bestehenden Kaltwalzens durchgeführt. Die Folien müssen für das Schleifen noch eine ausreichende Steifigkeit besitzen. Das ist aber bei Folien von 500 µm und kleiner nicht mehr der Fall. Die so erzielte hohe Oberflächengüte läßt sich bis zum Lötprozeß beibehalten, wenn das Weichglühen im Vakuum oder unter nicht oxidierender Schutzgas-Atmosphäre erfolgt.

Im Hinblick auf ein störungsfreies Auflöten bei gleichzeitiger Rekristallisation der Folien ist es vorteilhaft, im Anschluß an das Weichglühen der Folien deren Oberfläche durch einen zusätzlichen Kaltwalzstich auf die gleiche niedrige Oberflächenrauhigkeit wie vor dem Glühen zu bringen.

Unter den ODS-Eisenbasis-Sinterwerkstoffen haben sich für das erfinderische Verfahren vor allem solche mit einem Anteil von 3 bis 10 Gew.% Aluminium bewährt, wobei durch die Aluminium-Komponente die oberflächliche Bildung von Aluminiumoxidschichten gefördert wird. Ein bevorzugt verwendeter ODS-Sinterwerkstoff auf Eisenbasis besitzt folgende Legierungszusammensetzung:
6 - 30 Gew.% Cr, 3 - 10 Gew.% AI, bis 5 Gew.% Ti, bis 10 Gew.% Mo oder W, bis 5 Gew.% Ta,
0,15 - 2 Gew.% in der Matrix feindispers verteilte, mit dieser nicht reagierende Oxidteilchen der Metalle Yttrium, Aluminium, Lanthan und/oder Zirkonium, Rest Eisen.

Das erfinderische Verfahren wird anhand des nachfolgenden Ausführungsbeispieles näher erläutert.

### BEISPIEL:

Zur Durchführung des erfinderischen Verfahrens wurde ein Pulvergemisch mit folgender chemischer Zusammensetzung in der für die Herstellung derartiger Werkstoffe üblicher Korngrößen-verteilung zusammengestellt:
19 Gew.% Chrom, 5,5 Gew.% Aluminium, 0,5 Gew.% Titan, 0,5 Gew.% Yttriumoxid, Rest Eisen.
In Anwendung vorbeschriebener Verfahrensparameter wurde das Pulver zunächst mechanisch legiert, dann heißverdichtet und weiters über Heißwalzen und Kaltwalzen zu Folienbändern einer Dicke von 0,10 mm verarbeitet.
Derartige Bänder besaßen eine sehr geringe Duktilität, wie sich bei dem Versuch erwies, diese zu falzen. Die Folien brachen.
Daraufhin erfolgte ein Weichglühen der Folien bei 780°C während 60 min. Dabei ließen sich auch zu einer Spirale aufgewickelte Folien problemlos glühen, ohne daß es zum Verkleben von sich berührenden Folienoberflächen gekommen wäre.

Die Untersuchung eines aus der Folie herausgeschnittenen Teststückes bestätigte einen starken Abfall der nach dem Kaltwalzen gegebenen Festigkeit von 1612 auf 1240 MPa, der 0,2 %-Dehnungsgrenze von 1575 auf 1187 MPa, der Vickershärte von 428 auf 381 Härteeinheiten, sowie einen gleichzeitigen Anstieg der A5-Duktilität von 0,4 auf den überraschend hohen Wert von 4,1 %.

Entsprechend ließ sich die weichgeglühte Folie bei Raumtemperatur rißfrei sowohl in Walzrichtung, als auch in einer Querrichtung hierzu falzen und biegen.
Derartig vorbehandelte Folien ließen sich ebenso problemlos bei Raumtemperatur zu meterlangen Wellblechstrukturen verarbeiten.

Die so hergestellten und gebogenen und gefalzten Folien zeigten sehr gute Verschweißbarkeit und gute Lötbarkeit auf eine Grundplatte aus mischkristallverfestigten, bzw. ausscheidungsgehärteten Nickel-Basislegierungen. Gleichermaßen wichtig ist gute Verschweißbarkeit einzelner gebogener Strukturelemente untereinander und gute Verlötbarkeit dieser geschweißten Strukturelemente auf die Grundplatte. Ebenso gute Ergebnisse wurden beim Auflöten auf Eisen-Basis- sowie auf Nickel-Basis-ODS-Legierungen erzielt. Für das Hartlöten wurde ein Kobalt-Nickel-Chrom-Silizium-Lot verwendet. Die aus Basisplatte und Folienstruktur bestehende Baueinheit wurde dazu gleichmäßig auf 1140°C aufgeheizt und 75 min lang auf dieser Temperatur belassen.

Nach dem Abkühlen der Baueinheit bestätigten entsprechende Untersuchungen, daß sowohl eine mechanisch feste, die bestehenden Werkstoffstrukturen nur unwesentlich beeinflussende Verlötung der Bauteilkomponenten stattgefunden hat und daß gleichzeitig eine vollständige Rekristallisierung der zuvor sehr feinkörnigen Struktur des Folienmaterials zu einer grobkörnigen, die Warmfestigkeit steigernden Gefügestruktur stattgefunden hat.

Die Verwendung des erfinderischen Verfahrens ist nicht auf das vorgenannte Beispiel beschränkt.

Ein bedeutsames Anwendungsgebiet für Bauteile nach dem vorliegenden Verfahren ist die Luft- und Raumfahrt, insbesondere in Form von ringförmigen Dichtelementen im Schaufelbereich von Turbinen oder als Hitzeschild-Kachel. Andere Anwendungen liegen im Bereich metallische Schadstoff-Katalysatoren für Kraftfahrzeuge und im Bereich Wärmespeicher für regenerative Brennersysteme.

## Patentansprüche

1. Verfahren zur Herstellung eines Bauteiles mit auf einem Basiskörper aufgelöteten Elementen aus gebogenen oder gefalzten Metallfolien einer Folienstärke kleiner 500 µm aus einem ODS-Sinterwerkstoff auf Eisenbasis, wobei dieser Sinterwerkstoff durch mechanisches Legieren der Ausgangspulver, Heißpressen und/oder Strangpressen hergestellt und zur Folienformgebung und zur gleichzeitigen Verbesserung der mechanischen Festigkeitseigenschaften in der Schrittfolge Heißwalzen, Kaltwalzen und abschließendes Rekristallisationsglühen fertigbearbeitet wird,
**dadurch gekennzeichnet**,
daß die Fertigung des Folienwerkstoffes nach dem Kaltwalzen mit einem Weichglühprozeß unterbrochen wird und daß die in der Folge bei Raumtemperatur gebogene oder gefalzte Folie in einem einzigen Arbeitsgang gleichzeitig mit dem Auflöten bei Temperaturen zwischen 1100 und 1330°C während 3 - 600 min rekristallisationsgeglüht wird.

2. Verfahren zur Herstellung eines Bauteils nach Anspruch 1, dadurch gekennzeichnet, daß vor oder in Unterbrechung des mehrere Walzstiche umfassenden Kaltwalzens die Folienoberfläche mechanisch, insbesondere durch Schleifen, von oberflächlichen Verunreinigungen und Reaktionsprodukten befreit wird.

3. Verfahren zur Herstellung eines Bauteils nach Anspruch 1 oder 2, dadurch gekennzeichnet, daß im Anschluß an den Weichglühprozeß und vor dem Falzen der Folie mindestens ein weiterer Kaltwalzschritt angeschlossen wird.

4. Verfahren zur Herstellung eines Bauteils nach Anspruch 1 bis 3, dadurch gekennzeichnet, daß der Weichglühprozeß während 30 - 300 min bei 600 - 1050°C unter Schutzgasatmosphäre, in H₂-Atmosphäre oder im Hochvakuum erfolgt.

5. Verfahren zur Herstellung eines Bauteils nach Anspruch 1 bis 4, dadurch gekennzeichnet, daß als Lötwerkstoff eine Kobaltbasis-Legierung wie CoCrNiSiW verwendet wird.

6. Verfahren zur Herstellung eines Bauteils nach Anspruch 1 bis 5, dadurch gekennzeichnet, daß als Lötwerkstoff Nickel-Chrom-Legierungen wie NiCrSi, NiCrSiMn, NiCrB und NiCrSiBFeW oder Eisen-Basislegierungen, wie FeSiB, oder auch Titan-Basislegierungen verwendet werden.

7. Verfahren zur Herstellung eines Bauteils nach Anspruch 1 bis 6, dadurch gekennzeichnet, daß ein stumpfes Auflöten der Folien im Bereich ihrer seitlichen Ränder und die Rekristallisationsglühung des Folienwerkstoffes zonenweise zeitlich nacheinander erfolgt.

8. Bauteile hergestellt nach dem Verfahren von Anspruch 1 bis 7, dadurch gekennzeichnet, daß der ODS-Sinterwerkstoff auf Eisenbasis folgende Legierungs-Zusammensetzung besitzt:
6 - 30 Gew.% Cr, 3 - 10 Gew.% Al, bis 5 Gew.% Ti, bis 10 Gew.% Mo oder W, bis 5 Gew.% Ta,
0,15 - 2 Gew.% in der Matrix feindispers verteilte, mit dieser nicht reagierende Oxidteilchen der Metalle Yttrium, Aluminium, Lanthan und/oder Zirkonium,
Rest Eisen.

## Claims

1. A process for producing a component with elements soldered onto a base member from bent or folded metal foils with a foil thickness of less than 500 *µ*m made from an iron-based ODS sintered material, wherein said sintered material is produced by mechanical alloying of the starting powder, hot-pressing and/or extrusion and, to shape the foil and simultaneously improve mechanical strength characteristics, is finished by a sequence of steps comprising hot-rolling, cold-rolling and then recrystallisation annealing
**characterised in that**
production of the foil material is interrupted with a soft-annealing process after cold-rolling and in that the foil, which is subsequently bent or folded at room temperature, is recrystallisation-annealed and soldered at temperatures of between 1100 and 1330°C for 3 - 600 mins simultaneously in a single operation.

2. A process for producing a component according to claim 1, characterised in that the foil surface is cleared mechanically, in particular by grinding, of superficial contamination and reaction products before or in a break in the cold-rolling operation, which comprises a plurality of roll passes.

3. A process for producing a component according to claim 1 or claim 2, characterised in that at least one further cold-rolling step is inserted between the soft-annealing process and folding of the foil.

4. A process for producing a component according to claims 1 to 3, characterised in that the soft-annealing process proceeds for 30 - 300 mins at 600 - 1050°C in a protective gas atmosphere, in an H₂ atmosphere or in a high vacuum.

5. A process for producing a component according to claims 1 to 4, characterised in that a cobalt-based alloy such as CoCrNiSiW is used as soldering material.

6. A process for producing a component according to claims 1 to 5, characterised in that nickel/chromium alloys, such as NiCrSi, NiCrSiMn, NiCrB and NiCrSiBFeW or iron-based alloys, such as FeSiB, or also titanium-based alloys are used as soldering material.

7. A process for producing a component according to claims 1 to 6, characterised in that butt-soldering of the foils in the area of their lateral edges and recrystallisation annealing of the foil material proceed zone-wise in temporal succession.

8. Components produced by the process of claims 1 to 7, characterised in that the iron-based ODS sintered material has the following alloy composition:
6 - 30 wt.% Cr, 3 - 10 wt.% Al, up to 5 wt.% Ti, up to 10 wt.% Mo or W, up to 5 wt.% Ta,
0.15 - 2 wt.% of oxide particles of the metals yttrium, aluminium, lanthanum and/or zirconium finely dispersed in the matrix and not reactive therewith,
the rest being iron.

## Revendications

1. Procédé de fabrication d'un composant au moyen d'éléments qui sont brasés sur un corps de base et consistent en feuilles métalliques coudées ou pliées d'une épaisseur de feuille inférieure à 500 µm en une matière frittée ODS à base de fer, dans lequel cette matière frittée est fabriquée par alliage mécanique des poudres d'origine, compression à chaud et/ou filage et est ensuite finie par une séquence de laminage à chaud, de laminage à froid et ensuite de recuit final de recristallisation afin de configurer les feuilles et d'améliorer simultanément les propriétés de résistance mécanique,
caractérisé en ce que
la fabrication de la matière de feuille est interrompue, après le laminage à froid, par un processus de recuit et en ce qu'ensuite la feuille coudée ou pliée à température ambiante est soumise en une étape unique de travail à un recuit de recristallisation simultané avec le brasage, pendant 3 à 600 minutes à des températures comprises entre 1100 et 1330°C.

2. Procédé de fabrication d'un composant selon la revendication 1, caractérisé en ce que des impuretés superficielles et produits de réaction sont éliminées mécaniquement de la surface de feuille, en particulier par rectification, avant le laminage à froid qui comprend plusieurs passes de laminage ou pendant une interruption de celui-ci.

3. Procédé de fabrication d'un composant selon la revendication 1 ou 2, caractérisé en ce qu'au moins une étape additionnelle de laminage à froid est exécutée à la suite du processus de recuit et avant le pliage de la feuille.

4. Procédé de fabrication d'un composant selon l'une quelconque des revendications 1 à 3, caractérisé en ce que le processus de recuit est mis en oeuvre pendant 30 à 300 minutes à 600 à 1050°C sous une atmosphère gazeuse protectrice, dans une atmosphère de H₂ ou sous un vide élevé.

5. Procédé de fabrication d'un composant selon l'une quelconque des revendications 1 à 4, caractérisé en ce qu'un alliage à base de cobalt, par exemple CoCrNiSiW, est utilisé comme matière de brasure.

6. Procédé de fabrication d'un composant selon l'une quelconque des revendications 1 à 5, caractérisé en ce que des alliages à base de nickel-chrome comme NiCrSi, NiCrSiMn, NiCrB et NiCrSiBFeW ou des alliages à base de fer comme FeSiB, ou encore des alliages à base de titane sont utilisés comme matière de brasure.

7. Procédé de fabrication d'un composant selon l'une quelconque des revendications 1 à 6, caractérisé en ce qu'un brasage bout à bout des feuilles dans la zone de leurs bords latéraux et le recuit de recristallisation de la matière de feuille sont effectués successivement par zones.

8. Composants fabriqués selon le procédé de l'une quelconque des revendications 1 à 7, caractérisé en ce que la composition d'alliage de la matière frittée ODS à base de fer est la suivante:
6 à 30% en poids de Cr, 3 à 10% en poids d'AI, jusqu'à 5% en poids de Ti, jusqu'à 10% en poids de Mo ou de W, jusqu'à 5% en poids de Ta,
0,15 à 2% en poids de particules d'oxydes des métaux du groupe formé par l'yttrium, l'aluminium, le lanthane et/ou le zirconium, finement dispersées dans la matrice et ne réagissant pas avec celle-ci,
solde fer.
